(19) Europäisches Patentamt
European Patent Office
Office européen des brevets

(11) **EP 3 768 783 B1**

(12) **EUROPEAN PATENT SPECIFICATION**

(45) Date of publication and mention
of the grant of the patent:
**15.03.2023 Bulletin 2023/11**

(21) Application number: **19707636.7**

(22) Date of filing: **14.02.2019**

(51) International Patent Classification (IPC):
*C09D 7/60* *(2018.01)*      *C09D 7/63* *(2018.01)*
*C08K 5/05* *(2006.01)*      *C08K 5/17* *(2006.01)*

(52) Cooperative Patent Classification (CPC):
**C09D 7/63;** C08K 5/05; C08K 5/17

(86) International application number:
**PCT/US2019/018003**

(87) International publication number:
**WO 2019/182696 (26.09.2019 Gazette 2019/39)**

(54) **NEUTRALIZER COMPOSITION**

NEUTRALISATORZUSAMMENSETZUNG

COMPOSITION NEUTRALISANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.03.2018 IN 201841010168**

(43) Date of publication of application:
**27.01.2021 Bulletin 2021/04**

(73) Proprietors:
• **Rohm and Haas Company
Collegeville, PA 19426 (US)**
• **Dow Global Technologies, LLC
Midland, MI 48674 (US)**

(72) Inventors:
• **JAIN, Abhisar
Mumbai 400079 (IN)**
• **SALINAS, Heidi V.
Queretaro, 76148 (MX)**
• **GHOSAL, Siddhartha
Mumbai 400079 (IN)**

(74) Representative: **Jewell, Catherine Mary
Beck Greener LLP
Fulwood House
12 Fulwood Place
London WC1V 6HR (GB)**

(56) References cited:
WO-A1-2014/186098      JP-A- H07 228 835
US-A- 4 786 565        US-A- 5 977 042

**Description**

BACKGROUND

JP H07 228835 relates to a coating resin composition, obtained by dispersing in water, through an isocyanate compound, a modified resin produced by addition reaction to (A) a copolymer of an ethylenic unsaturated monomer and a hydroxyl-bearing ethylenic unsaturated monomer of (B)(1) a hydroxycarboxylic acid and (2) at least one kind among polyoxyalkylene glycols, polyoxyalkylerte bisphenol A ethers and polyoxyalkylene glycol monoalkyl ethers.

WO 2014/186098 relates to compositions such as amine compositions used as clay inhibitors in water-based drilling fluids and in hydraulic fracturing fluids for drilling wells and for fracturing subterranean formations or used as clay inhibitors in other treatment fluids for treating wells or subterranean formations.

US 5977042 relates to a composition for stripping coatings from a surface, the composition including:

(a) A solvent mixture composed of a phenyl substituted alkyl alcohol and an alkyl or aryl glycol ether or an alkyl or aromatic alcohol;
(b) A coupler composed of a sale formed from a water soluble organic amine and an acid comprising at least one C7-C18 ethoxylated anionic surfactant;
(c) Optionally water.

Paints, coatings, sealants, adhesives and related products are typically produced as uncured and/or fluid mixtures which are sealed and stored for a period of time prior to use. A number of amine-based compounds have been used in such coating formulations as neutralizing agents. Neutralizing agents are present in many waterborne coatings in order to bring the pH up to an optimal value between 8 and 10, typically about 8.5 to 9.3. Ammonia and various low molecular weight aliphatic amines have been used, but these materials impart an undesirable and unpleasant odor to the paint and may contribute volatile organic compounds (VOCs) to the overall formulation. Further, coating compositions containing such amines have exhibited undesirable characteristics, such as blistering or efflorescence. As such, an improved neutralizing agent is desired that provides pH control while minimizing blistering or efflorescence in the coating composition.

SUMMARY

A method for neutralizing a coating composition comprising adding a neutralizing agent to a coating composition; wherein the neutralizing agent comprises aminoethylethanolamine (AEEA) and at least one additional primary amine.

DETAILED DESCRIPTION

The neutralizing agents described herein are suitable for neutralizing the pH of a coating composition. "Coating composition" as used herein, includes any type of coating formulation, such as wood stain, varnish, pigment concentrate, paint, and generally any type of formulation suitable for the manufacture of a coating, which requires pH neutralizing during one or more manufacturing step.

The neutralizing agent is an amine-based formulation that includes aminoethylethanolamine (AEEA) and at least one additional primary amine. The at least one additional amine is an amine other than AEEA. The at least one additional amine is a primary amine, or a mixture of primary amines. The at least one additional amine is preferably selected from one or more of monoethanolamine (MEA), and monoisopropanolamine (MIPA. Preferably, the at least one additional amine is MEA. The additional primary amine may be selected from any primary amine that can neutralize a coating composition. The additional primary amine may be selected from any primary amine known in the prior art.

"Neutralizing" the pH refers to the neutralizing agent reacting with the compounds in the coating composition to adjust the pH to a value of 8 or greater. Preferably, the pH is adjusted to a value of from 8 to 10, more preferably from 8.5 to 9.5.

The quantity of neutralizing agent added to the coating composition is a function of pH. Where the coating composition requires a relatively greater pH adjustment, relatively more neutralization agent will be added to the coating composition. On a weight percentage basis, for most applications the neutralizing agent will comprises from 0.05 to 2 percent, by weight, of the total weight of the coating composition.

Neutralizing agent(s) may be added to the coating composition one by one or as a formulation of one or more amines. When neutralizing agent is added as a formulation of one or more amines, the neutralizing agent contains 17 to 22 percent, by weight, AEEA. The neutralizing agent contains 40 to 55 percent, by weight, of the at least one additional amine. The neutralizing agent further comprises a solvent. Where the coating composition is an aqueous composition, water is preferably the solvent. The neutralizing agent contains 23 to 43 percent, by weight, solvent. The concentration of the amines in the formulation may vary based on choice of amine(s) and/or solvent(s). A person skilled in the art may vary the concentration of amines to get desired pH and/or desired coating properties like blister resistance and efflorescence resistance.

The method of neutralizing coating compositions described herein has been surprisingly found to reduce the amount of efflorescence or blistering as compared to other coating compositions which have been produced using other neutralization agents.

The neutralizing agent is one component of the coating composition. The coating composition is otherwise formulated as is known in the art. For example, the coating composition may also contain pigments, binders, carriers, leveling agents, surfactants, thickeners, rheology modifiers, co-solvents, corrosion inhibitors, defoamers, dispersants, or biocides.

The coating composition is manufactured according to conventional coating manufacturing techniques. Typically, the coating compositions are manufactured by a two-step process. First, a dispersion phase, commonly referred to as the grind phase, is prepared by mixing the dry pigments with other grind phase components, including most other solid powder formulation materials, under constant high shear agitation to provide a high viscosity and high solids mixture. This part of the process is designed to effectively wet and deagglomerate the dry pigments and stabilize them in an aqueous dispersion. The second step of the coating composition manufacturing process is commonly referred to as the letdown or thindown phase, because the viscous grind is diluted with the remaining formulation components, which are generally less viscous than the grind mix. Typically, the binders, any predispersed pigments, and any other paint materials that only require mixing and perhaps moderate shear, are incorporated during the letdown phase. The letdown phase may be done either by sequentially adding the letdown components into a vessel containing the grind mix, or by adding the grind mix into a vessel containing a premix of the latex resins and other letdown components, followed by sequential addition of the final letdown components. In either case, constant agitation is needed, although application of high shear is not required. The neutralizing agent is added during either or both of the grinding stage or let down stage to improve the coating composition. When the neutralizing agent is added to the grinding stage it may also improve the dispersion of pigment and other filler in the coating composition. When the neutralizing agent is added during let down stage it may help adjust the pH of the coating composition towards alkaline side.

It was surprisingly found that the use of AEEA and an additional primary amine as the neutralizing agent provide improved blister resistance and/or efflorescence resistance.

The following examples illustrate the present invention without however limiting the scope thereof.

EXAMPLES

EVALUATION PROCEDURES

All test methods listed herein were performed according to the protocols described in the referenced ASTM standards (unless stated otherwise), which standards are incorporated herein by reference. The coatings composition prepared according to these Examples were evaluated using the following ASTM Test Methods:

Whiteness and Yellowness, E 313;
Viscosity Stormer viscometer D 562;
pH E 70;
Gloss/sheen D 523;
Opacity, 3-mil drawdown, D 2805;
Scrubbability, D 2486;
Blister Resistance Performance, D 714; and
Efflorescence Resistance Performance, D 7072.

The pigment volume concentration (PVC) was calculated as follows:

$$PVC = (V_P + V_F) / (V_P + V_F + V_B);$$

$V_P$: Volume of the pigments;
$V_F$: Volume of the fillers (extenders); and
$V_B$: Volumes of the dried film of all binders (sum of film-forming agents, resins, plasticizers and additional resins)

The volumes (V) were calculated as the quotient of mass (m) and density ($\rho$):

$$V = m/\rho$$

EXAMPLE 1

This example demonstrates the benefit of the neutralizing agent described herein as used to neutarlize a pure acrylic binder-based latex paint composition.

The latex paint composition was prepared by first preparing a grind stage by mixing the materials listed in Table 1 in a Dispermat brand dispersing unit. Water was added to the vessel and stirred at RPM 100-200 in the disperser vessel. The potassium tripolyphosphate (KTPP) (0.10 wt %) was slowly added to the vessel with continuous stirring at 500 - 800 RPM. Defoamer (Tego Foamex 3062- 0.03 wt%); dispersant (Tamol 681- 0.71 wt%), and surfactant (Triton™ CF-10 - 0.20 wt%), were added with continuous stirring. After 10 mins, thickener (Natrosol™ 250 HBR - 0.18 wt % ) prewetted with freeze thaw and open time additive (Propylene glycol - 0.69 wt%) was added slowly at 800-1000 RPM and mixed until a uniform paste without lumps was formed. Then biocide (Kathon™ LX 1.5% - 0.15 wt %) and biocide (ROZONE™ 2000 - 0.23 wt %) were added to the vessel. After 3 mins of mixing, titanium dioxide pigment (Tronox CR 828 - 20.31 wt %) was added to the vessel slowly and then stirring speed was adjusted to 900 RPM. After 5 min, filler (Minex 4 - 19.36 wt %) and Diatomite (Celite 281 - 1.26 wt %) were added slowly to the vessel and RPM was increased to 1200-1400 RPM for 45 min.

A multiplication factor of 83.72 for batch was taken so that 8 batches in letdown stage can be made from one mill base.

**TABLE 1**

| Grind Stage | Supplier | % wt |
|---|---|---|
| Water | - | 13.86 |
| KTPP | - | 0.10 |
| Tego Foamex 3062 | Evonik | 0.03 |
| Tamol 681 | Dow | 0.71 |
| Triton™ CF-10 | Dow | 0.20 |
| Kathon™ LX 1.5% | Dow | 0.15 |
| Rozone™ 2000 | Dow | 0.23 |
| **Pre-wetting stage** | | |
| Propylene Glycol | Dow | 0.69 |
| Natrosol 250 HBR | Ashland | 0.18 |
| Tronox CR-828 | Tronox | 20.31 |
| Minex 4 | Unimin | 19.36 |
| Celite 281 | Imerys | 1.26 |
| Water | | 2.00 |

The mixture as above was then let down with water (2.00 wt %). A new factor was calculated after adjusting for losses and then formulated with the ingredients listed in Table 2 according to the procedures described below Table 2. The mixture from the Grind Stage was then divided into 8 smaller batches that were then neutralized with 8 different neutralizing agents. For each unique sample, the "Neutralizing Agent" of Table 2 is selected from one of the neutralizing agents from Table 3.

**TABLE 2**

| LetDown | Supplier | % wt |
|---|---|---|
| Water | | 2.00 |
| Rhoplex™ AC-261LF | Dow | 31.56 |
| Foamaster 111 | BASF | 0.10 |

(continued)

| LetDown | Supplier | % wt |
|---|---|---|
| Ucar™ Filmer IBT | Dow | 0.95 |
| Butyl Carbitol™ | Dow | 0.95 |
| **Viscosity and pH adjustment stage:** | | |
| Water | | 2.33 |
| Acrysol™ RM-2020 NPR | Dow | 0.68 |
| Acrysol™ DR-110 | Dow | 0.34 |
| Neutralizing Agent | - | 0.03 |
| Water (for adjustment) | | 2.00 |

Each of the 8 batches were processed similarly as follows - 2 wt% water was added to the letdown stage and mixed with Pure Acrylic Binder (Rhoplex AC 261LF - 31.56 wt %) with stirring at 700-800 RPM. Defoamer (Foamstar 111- 0.10 wt %) and coalescing additive (Ucar Filmer IBT - 0.95 wt% and Butyl Carbitol - 0.95 wt %) were added and mixed for 10 mins at RPM of 700-800. Thickener (Acrysol™ RM 2020 NPR - 0.68 wt%) was added slowly and mixed it for 10 mins. Acrysol™ DR-110 0.34 wt% was added with water (2.33 %wt). To each sample was added one neutralizing agent (0.03 wt%) listed in Table 3 to adjust pH to 8.5±0.5. The paint formulation was adjusted to desired viscosity (98±3 KU) with remaining water(2.00 %wt).

The Pigment Volume Concentration (PVC) for each resulting paint composition was about 48.1% and viscosity about 98±3 KU. Each paint composition prepared as described herein was applied on standard paint testing panels (sourced from Leneta) with help of 150μ applicator on leneta sheet and 150 μ on the scrub sheet as stated in the ASTM protocols.

Table 3 lists the properties measured for each of the samples prepared according to the procedure described above, each having the neutralizing agent listed in the table and the properties measured according to the ASTM procedures listed above.

## TABLE 3

| Neutralizing Agent | NH$_4$OH | Amino methyl propanol | 2- butyl aminoethanol | MIPA | DIPA | AEEA + MEA | AEEA + MIPA | AEEA + DIPA |
|---|---|---|---|---|---|---|---|---|
| **pH** | 8.70 | 8.74 | 8.73 | 8.72 | 8.72 | 8.70 | 8.93 | 8.88 |
| **Opacity (%)** | 96.67 | 96.00 | 96.10 | 96.07 | 96.12 | 96.32 | 96.49 | 96.36 |
| **Whiteness (WI Berger E313-10)** | 85.20 | 84.74 | 85.06 | 84.86 | 85.17 | 85.55 | 84.23 | 84.26 |
| **Gloss (20° / 60° / 85°)** | 1.2/3.2/1.9 | 1.2/3.1/1.7 | 1.2/3.11/1.7 | 1.2/3.1/1.9 | 1.2/3.1/1.8 | 1.2/3.1/1.8 | 1.3 / 3.3 / 1.5 | 1.3/3.3/2 |
| **Stormer (KU's)** | 98.3 | 95.4 | 95.40 | 95.3 | 97.2 | 95.7 | 97.5 | 97.7 |
| **Scrub Resistance** | 1169 | 1163 | 1275 | 1154 | 1221 | 1239 | Not checked | Not Checked |
| **Blister Resistance** | 6 -Few | 6-Medium | 6 - Medium Dense | 4- Medium | 6 - Few | 8 - Few | 4 - Medium | 6-Medium |
| **Efflorescence** | Severe | Severe | Slight | Moderate | Severe | Slight | Slight | Moderate |

EP 3 768 783 B1

Example 2

This example demonstrates the benefit of the neutralizing agent described herein for neutralizing vinyl acrylic binder-based latex paint compositions.

The latex paint composition was prepared by first preparing a grind stage by mixing the materials listed in Table 4 in a Dispermat brand dispersing unit. Water was added to the vessel and a stirrer stirred the contents of the vessel at RPM 100-200. Potassium tripolyphosphate (KTPP) (0.10 wt %) was slowly added to the vessel with continuous stirring at 500 - 800 RPM. Defoamer (Foamstar 111- 0.15 wt%); dispersant (Tamol 165A- 1.31 wt%, Glomax LL - 7.86 wt% ), and surfactant (Triton™ CF-10 - 0.20 wt%) were added with continuous stirring for 10 mins. Thickener (Natrosol™ 250 HBR - 0.45 wt %) prewetted with Ethylene glycol (0.74 wt %) was added slowly at 800-1000 RPM and mixed until a uniform paste without lumps was formed. After 3 mins of mixing, titanium dioxide pigment (Ti-Pure R 902 - 11.26 wt %) was added to the vessel slowly and stirring speed was adjusted to 900 RPM. After 5 min, fillers (Omyacarb1 - 8.73 wt % and Omycarb 5 - 9.00 wt %) were added slowly to the vessel and RPM was increased to 1200-1400 RPM for 45 min.

A multiplication factor 83.72 for batch was taken so that 8 batches in letdown stage can be made from one mill base.

**TABLE 4**

| Grind Stage | Supplier | % wt |
|---|---|---|
| Water | - | 14.87 |
| KTPP | - | 0.10 |
| Tamol 165A | Dow | 1.31 |
| Triton™ CF-10 | Dow | 0.20 |
| Natrosol 250 HBR | Ashland | 0.45 |
| Ti-Pure R-902 | Chemours | 11.26 |
| Foamaster 111 | BASF | 0.15 |
| Omyacarb 1 | Omya | 8.73 |
| Omyacarb 5 | Omya | 9.00 |
| Glomax LL | Imervs | 7.86 |
| Ethylene Glycol | ME Global | 0.74 |
| Water | | 9.85 |

The mixture as above was then let down with water (9.85 wt %). A new factor was calculated after adjusting for losses and then formulated with the ingredients listed in Table 5 according to the procedures described below the table. The mixture from the Grind Stage was then divided into 8 smaller batches that were then neutralized with a different neutralizing agent. For each unique sample, the "Neutralizing Agent" of Table 5 is selected from one of the neutralizing agents from Table 6.

**TABLE 5**

| LetDown | Supplier | |
|---|---|---|
| Water | | 3.55 |
| Ropaque™ Ultra E | Dow | 4.97 |
| Rovace™ NueVA 4823 | Dow | 16.80 |
| Ucar™ Filmer IBT | Dow | 0.32 |
| Foamaster 111 | BASF | 0.04 |
| **Viscosity and pH adjustment:** | | |
| Neutralizing Agent | | 0.10 |
| Acrysol™ RM-2020 NPR | Dow | 0.37 |

(continued)

| Viscosity and pH adjustment: | | |
| --- | --- | --- |
| Water | | 9.17 |
| Acrysol™ DR-110 | Dow | 0.15 |

Each of the 8 batches were processed similarly as follows -3.55% water was added to the letdown stage and mixed with opaque polymer (Ropaque Ultra E - 4.97wt %) with stirring at 400 - 500 RPM. Vinyl Acrylic Polymer (Rovace NueVA 4823 - 16.80 wt %) was added and speed was adjusted to 700- 800 RPM and mixed it for 10 min. Coalescing additive (Ucar Filmer IBT - 0.32 wt %) was added and mixed for 10 mins at RPM of 700-800. Defoamer (Foamstar 111- 0.04 wt %) was added, followed by slow additon of Thickener (Acrysol™ RM 2020 NPR - 0.37 wt%) and mixed it for 10 mins. Acrysol™ DR-110 0.15 wt%) was added with water (3.00 % wt). To each sample was added one neutralizing agent (0.10 wt%) listed in Table 6 to adjust pH to 8.5±0.5.The paint formulation was adjusted to desired viscosity (98±3 KU) with remaining water (6.17 %wt).

The Pigment Volume Concentration (PVC) for each resulting paint composition was about 64.9% and viscosity about 98±3 KU. Each of the paint compositions prepared as described herein was applied on standard paint testing panels (sourced from Leneta) with help of 150μ applicator on leneta sheet and 150 μ on the scrub sheet as stated in the ASTM protocols.

Table 6 lists the properties measured for each of the various samples prepared according to the procedure described above, each having the neutralizing agent listed in the table, the properties measured according to the ASTM procedures listed above.

**TABLE 6**

| Neutralizing Agent | NH4OH | Amino methyl propanol | 2- butyl aminoethanol | MIPA | DIPA | AEEA + MEA | AEEA + MIPA | AEEA+DIPA |
|---|---|---|---|---|---|---|---|---|
| pH | 8.82 | 8.7 | 8.72 | 8.82 | 8.73 | 8.76 | 8.73 | 8.81 |
| Opacity (%) | 97.30 | 97.17 | 97.52 | 97.05 | 96.96 | 97.03 | 97.41 | 96.91 |
| Whiteness (WI Berger E313-10) | 82.50 | 81.77 | 81.78 | 81.17 | 80.24 | 82.8 | 83.56 | 82.72 |
| Gloss (20° / 60° / 85°) | 1.2/2.4/6.2 | 1.2/2.3/6.1 | 1.2/2.3/6 | 1.2/2.3/6.1 | 1.2/2.3/6.5 | 1.2/2.3/5.9 | 1.2 / 2.3 / 5.9 | 1.2 / 2.3 / 5.8 |
| Stormer (KU's) | 97.3 | 97.7 | 96.7 | 96.7 | 96.5 | 97.0 | 95.1 | 95.6 |
| Scrub Resistance | 171 | 151 | 157 | 139 | 122 | 170 | Not cheked | Not checked |
| Efflorescence | Severe | Severe | Severe | Severe | Moderate | Slight | Slight | Moderate |

**Claims**

1. A method for neutralizing a coating composition comprising:

   adding a neutralizing agent to a coating composition;
   wherein the neutralizing agent comprises aminoethylethanolamine (AEEA) and
   at least one additional primary amine.

2. The method of claim 1, wherein the at least one additional amine is selected from one or more of monoethanolamine (MEA), and monoisopropanolamine (MIPA).

3. The method of claim 1, wherein the at least one additional amine is monoethanolamine (MEA).

4. The method of any one of claims 1 to 3, wherein adding the neutralizing agent adjusts the pH of the coating composition to a value of 8 or greater.

5. The method of any one of claims 1 to 4, wherein the neutralizing agent further comprises water.

6. The method of any one of claims 1 to 5, wherein the neutralizing agent comprises 17 to 22 percent, by weight, aminoethylethanolamine (AEEA).

7. The method of any one of claims 1 to 6, wherein the neutralizing agent comprises 40 to 55 percent, by weight, of the at least one additional amine.

8. The method of any one of claims 5 to 7, wherein the neutralization agent comprises 17 to 22 percent, by weight, AEEA, 40 to 55 percent, by weight, of the at least one additional amine, and 23 to 43 percent by weight, water.

9. A coating composition comprised of a pigment, water and a neutralizing agent, wherein the neutralizing agent comprises aminoethylethanolamine (AEEA) and at least one additional primary amine.

10. The coating composition of claim 9, wherein the at least one additional amine is selected from one or more of monoethanolamine (MEA), and monoisopropanolamine (MIPA).

11. The coating composition of claim 10, wherein the at least one additional amine is monoethanolamine (MEA).

**Patentansprüche**

1. Verfahren zum Neutralisieren einer Beschichtungszusammensetzung, umfassend:

   Hinzufügen eines Neutralisationsmittels zu einer Beschichtungszusammensetzung;
   wobei das Neutralisationsmittel Aminoethylethanolamin (AEEA) und mindestens ein zusätzliches primäres Amin umfasst.

2. Verfahren nach Anspruch 1, wobei das mindestens eine zusätzliche Amin aus einem oder mehreren von Monoethanolamin (MEA) und Monoisopropanolamin (MIPA) ausgewählt ist.

3. Verfahren nach Anspruch 1, wobei das mindestens eine zusätzliche Amin Monoethanolamin (MEA) ist.

4. Verfahren nach einem der Ansprüche 1 bis 3, wobei das Hinzufügen des Neutralisationsmittels den pH-Wert der Beschichtungszusammensetzung auf einen Wert von 8 oder höher einstellt.

5. Verfahren nach einem der Ansprüche 1 bis 4, wobei das Neutralisationsmittel ferner Wasser umfasst.

6. Verfahren nach einem der Ansprüche 1 bis 5, wobei das Neutralisationsmittel 17 bis 22 Gew.-% Aminoethylethanolamin (AEEA) umfasst.

7. Verfahren nach einem der Ansprüche 1 bis 6, wobei das Neutralisationsmittel 40 bis 55 Gew.-% des mindestens einen zusätzlichen Amins umfasst.

8. Verfahren nach einem der Ansprüche 5 bis 7, wobei das Neutralisationsmittel 17 bis 22 Gew.-%, AEEA, 40 bis 55 Gew.-% des mindestens einen zusätzlichen Amins und 23 bis 43 Gew.-% Wasser umfasst.

9. Beschichtungszusammensetzung, bestehend aus einem Pigment, Wasser und einem Neutralisationsmittel, wobei das Neutralisationsmittel Aminoethylethanolamin (AEEA) und mindestens ein zusätzliches primäres Amin umfasst.

10. Beschichtungszusammensetzung nach Anspruch 9, wobei das mindestens eine zusätzliche Amin aus einem oder mehreren von Monoethanolamin (MEA) und Monoisopropanolamin (MIPA) ausgewählt ist.

11. Beschichtungszusammensetzung nach Anspruch 10, wobei das mindestens eine zusätzliche Amin Monoethanolamin (MEA) ist.

## Revendications

1. Procédé de neutralisation d'une composition de revêtement comprenant :

   l'addition d'un agent neutralisant à une composition de revêtement ;
   dans lequel l'agent neutralisant comprend de l'aminoéthyléthanolamine (AEEA) et au moins une amine primaire supplémentaire.

2. Procédé selon la revendication 1, dans lequel l'au moins une amine supplémentaire est choisie parmi une ou plusieurs parmi la monoéthanolamine (MEA), et la monoisopropanolamine (MIPA).

3. Procédé selon la revendication 1, dans lequel l'au moins une amine supplémentaire est la monoéthanolamine (MEA).

4. Procédé selon l'une quelconque des revendications 1 à 3, dans lequel l'addition de l'agent neutralisant ajuste le pH de la composition de revêtement à une valeur de 8 ou plus.

5. Procédé selon l'une quelconque des revendications 1 à 4, dans lequel l'agent neutralisant comprend en outre de l'eau.

6. Procédé selon l'une quelconque des revendications 1 à 5, dans lequel l'agent neutralisant comprend de 17 à 22 %, en poids, d'aminoéthyléthanolamine (AEEA).

7. Procédé selon l'une quelconque des revendications 1 à 6, dans lequel l'agent neutralisant comprend de 40 à 55 %, en poids, de l'au moins une amine supplémentaire.

8. Procédé selon l'une quelconque des revendications 5 à 7, dans lequel l'agent de neutralisation comprend de 17 à 22 %, en poids, d'AEEA, de 40 à 55 %, en poids, de l'au moins une amine supplémentaire, et de 23 à 43 % en poids, d'eau.

9. Composition de revêtement composée d'un pigment, d'eau et d'un agent neutralisant, dans laquelle l'agent neutralisant comprend de l'aminoéthyléthanolamine (AEEA) et au moins une amine primaire supplémentaire.

10. Composition de revêtement selon la revendication 9, dans laquelle l'au moins une amine supplémentaire est choisie parmi une ou plusieurs parmi la monoéthanolamine (MEA), et la monoisopropanolamine (MIPA).

11. Composition de revêtement selon la revendication 10, dans laquelle l'au moins une amine supplémentaire est la monoéthanolamine (MEA).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H07228835 B
- WO 2014186098 A
- US 5977042 A